# EUROPEAN PATENT APPLICATION

(11) **EP 2 852 223 A1**
(43) Date of publication of application: **25.03.2015**
(21) Application number: 13306279.4
(22) Date of filing: 19.09.2013
(51) Int. Cl.: H04W 48/18

(54) **Access to local andsf server with dedicated bearer**

(71) Applicant: ALCATEL LUCENT, 92100 Boulogne-Billancourt (FR)
(72) Inventor: Orlandi, Barbara, 91620 NOZAY (FR); El Mghazli, Yacine, 91620 NOZAY (FR)
(74) Representative: 2SPL Patentanwälte PartG mbB

(57) **Abstract**

A method for allowing a user equipment (1) to access a local Access Network Discovery and Selection Function (6) server associated with a radio access network of a mobile network and to which a central Access Network Discovery and Selection Function (4) server associated with a core network of said mobile network provides a delegation for at least a local policy, the method comprising allowing said access using a dedicated bearer established for said access in said mobile network.

## Description

### FIELD OF THE INVENTION

The present invention relates to the technical field of ANDSF (Access Network Discovery and Selection Function), and particularly to systems and methods to access a local ANDSF server.

### BACKGROUND OF THE INVENTION

In order to address the problem of increasing mobile traffic demands and enhance mobile networks capacities, mobile network operators (MNO) are currently exploiting advantages of heterogeneous access networks. Such heterogeneous access networks can be for instance, 3GPP technologies such as LTE, interfaced with non-3GPP access network such as WLAN (e.g. Wi-Fi). Each network is enforcing policies, i.e. rules provided by the network owner, permitting to manage traffic demands and provide efficient user experience. For instance, policy may permit to manage traffic constraints, network loading changes, user subscriptions or QoS (Quality of Service) prioritization.

In heterogeneous operator environments, each network may be owned and controlled by a single network operator, and various networks may not always offer the same policy enforcement. Accordingly, one challenge for mobile network operators in heterogeneous networks environments is to provide UE (user equipment) with consistent policies enforcement, while at the same time taking into account user preferences.

By "user equipment", it is meant, here, any device (ex: Smartphone, tablet, laptop) comprising means permitting to connect to a mobile network such as a cellular network, or to a WLAN such as a Wi-Fi network.

The 3GPP TS 23.402 Release 8 specification defines a network element called Access Network Discovery and Selection Function (ANDSF). The ANDSF contains data management and control functionality necessary to provide network discovery and selection assistance data as per operators' policy. Indeed, the ANDSF can fulfill the following tasks:
- assisting UE with performing access network discovery and selection;
- providing UE with a set of information about network discovery and selection ;
- assisting UE with selecting the access network or the inter-system mobility policy ;
- controlling and assisting UE with performing the intersystem change.

The ANDSF shall respond to UE requests for access network discovery information (pull mode) and may be able to initiate data transfer to the UE (push mode), based on network triggers or as a result of previous communication with the UE. To do so, a direct interface S14 is defined between the UE and an ANDSF server reachable through an IP network. Thanks to an ANDSF server, policies based on dynamic information such as QoS or load of a given network or discovery information with a Wi-Fi networks map, can be provided to the UE.

Nevertheless, it is difficult for an operator to monitor the status of a huge number of cells access points from a centralized ANDSF server and policies updates are only meaningful for UEs located nearby the access points, since local radio conditions may change very fast.

Therefore, current communication systems do not efficiently use ANDSF functionalities and should be improved.

One object is to provide a solution to the aforementioned problems, and offer other advantages over the prior art.

### SUMMARY OF THE INVENTION

Various embodiments are directed to addressing the effects of one or more of the problems set forth above. The following presents a simplified summary of embodiments in order to provide a basic understanding of some aspects of the various embodiments. This summary is not an exhaustive overview of these various embodiments. It is not intended to identify key critical elements or to delineate the scope of these various embodiments. Its sole purpose is to present some concepts in a simplified form as a prelude to the more detailed description that is discussed later.

Various embodiments relate to a central Access Network Discovery and Selection Function server associated with a core network of a mobile network, configured to request the triggering of the establishment of a dedicated bearer in said mobile network for access by a user equipment to a local Access Network Discovery and Selection Function server associated with a radio access network of said mobile network, and to which the central Access Network Discovery and Selection Function server provides a delegation for at least a local policy.

In accordance with a broad aspect, the above central Access Network Discovery and Selection Function server is further configured to send, in response to a policy request message received from the user equipment, a policy delegation message, said policy delegation message including information relating to the local Access Network Discovery and Selection Function server.

In accordance with another broad aspect, the above central Access Network Discovery and Selection Function server is further configured to request the triggering of the establishment of the dedicated bearer to a Policy Charging Rule Function module.

Further, various embodiments relate to a user equipment configured to access a local Access Network Discovery and Selection Function server associated with a radio access network of a mobile network and to which a central Access Network Discovery and Selection Function server associated with a core network of said mobile network provides a delegation for at least a local policy, through a dedicated bearer established in said mobile network for said access.

In accordance with a broad aspect, the above user equipment is further configured
- to send a policy request message to the central Access Network Discovery and Selection Function server to retrieve or update policy information;
- to receive a policy delegation message from the central Access Network Discovery and Selection Function server, said policy delegation message informing the user equipment that the central Access Network Discovery and Selection Function server delegates at least a local policy to a local Access Network Discovery and Selection Function server, and including information relating to the local Access Network Discovery and Selection Function server.

In accordance with another broad aspect, the above user equipment is further configured to associate the information relating to the local Access Network Discovery and Selection Function server with information referring to the dedicated bearer.

Further, various embodiments relate to a base station of a mobile network configured to establish a dedicated radio access bearer with a user equipment, the dedicated radio access bearer being used for access by the user equipment to a local Access Network Discovery and Selection Function server associated with a radio access network of said mobile network and to which a central Access Network Discovery and Selection Function server provides a delegation for at least a local policy.

In accordance with a broad aspect, the above base station comprises a module configured
- to extract user equipment incoming data from the dedicated radio access bearer ;
- to route the extracted data towards the local Access Network Discovery and Selection Function server.

In accordance with another broad aspect, the above module is further configured
- to store information referring to the dedicated radio access bearer ;
- to verify for each bearer associated to any incoming uplink data from the user equipment a bearer information ;
- to extract and route the data towards the local Access Network Discovery and Selection Function server when the bearer information match a stored information referring to the dedicated radio access bearer.

In accordance with another broad aspect, the bearer information includes Tunnel Endpoint Identifier or Quality of Service class of identifier.

In accordance with another broad aspect, the module is further configured for routing data from the local Access Network Discovery and Selection Function server to the user equipment with using the dedicated radio access bearer.

Further, various embodiments relate to systems for allowing a user equipment to access a local Access Network Discovery and Selection Function server interfaced with a base station, these systems comprising
- the user equipment connected to the base station and to a central Access Network Discovery and Selection Function server ;
- the base station connected to a packet data network gateway ;
- the central Access Network Discovery and Selection Function server interfaced with a Policy Charging Rule Function module ;
- the central Access Network Discovery and Selection Function server configured
   ○ to inform the user equipment of a delegation of a level of policy control to the local Access Network Discovery and Selection Function server ;
   ○ to request the Policy Charging Rule Function module to trigger the establishment of a dedicated bearer from the packet data network gateway to the user equipment.

Further, various embodiments relate to methods for allowing a user equipment to access a local Access Network Discovery and Selection Function server associated with a radio access network of a mobile network and to which a central Access Network Discovery and Selection Function server associated with a core network of said mobile network provides a delegation for at least a local policy, these methods comprising allowing said access using a dedicated bearer established for said access in said mobile network.

In accordance with a broad aspect, the above methods further comprise informing the user equipment by the central Access Network Discovery and Selection Function server of a delegation of a level of policy control to the local Access Network Discovery and Selection Function server.

In accordance with another broad aspect, the above methods further comprise requesting a Policy Charging Rule Function module by the central Access Network Discovery and Selection Function server to trigger the establishment of the dedicated bearer.

In accordance with another broad aspect, following the triggering of a dedicated bearer establishment, the base station establishes a dedicated radio access bearer with the user equipment, the dedicated radio access bearer being used for said access to the local Access Network Discovery and Selection Function server.

In accordance with another broad aspect, the above methods further comprise
- extracting user equipment incoming data from the dedicated radio access bearer with a module comprised in the base station;
- routing with the module the extracted data towards the local Access Network Discovery and Selection Function server;
- storing by the module information referring to the dedicated radio access bearer;
- verifying by the module for each bearer associated to any incoming uplink data from the UE a bearer information ;
- extracting and routing with the module the data towards the local Access Network Discovery and Selection Function server when the bearer information match a stored information referring to the dedicated radio access bearer.

In accordance with another broad aspect, the above methods further comprise the routing by the module of data from the local Access Network Discovery and Selection Function server to the user equipment with using the dedicated radio access bearer.

Various embodiments further relate to computer program products for performing the above methods.

While the various embodiments are susceptible to various modification and alternative forms, specific embodiments thereof have been shown by way of example in the drawings. It should be understood, however, that the description herein of specific embodiments is not intended to limit the various embodiments to the particular forms disclosed.

It may of course be appreciated that in the development of any such actual embodiments, implementation-specific decisions should be made to achieve the developer's specific goal, such as compliance with system- related and business-related constraints. It will be appreciated that such a development effort might be time consuming but may nevertheless be a routine understanding for those or ordinary skill in the art having the benefit of this disclosure.

### DESCRIPTION OF THE DRAWING

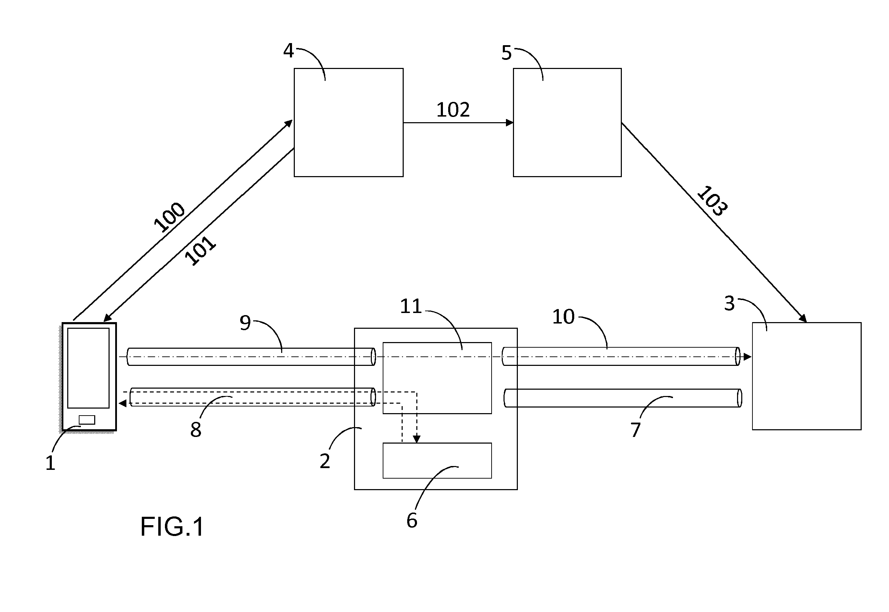

The objects, advantages and other features of various embodiments will become more apparent from the following disclosure and claims. The following non-restrictive description of preferred embodiments is given for the purpose of exemplification only with reference to the accompanying drawing in which Figure 1 is a schematic diagram illustrating functional components according to various embodiments.

### DETAILED DESCRIPTION OF ILLUSTRATIVE EMBODIMENTS

In various embodiments described hereinafter, a central ANDSF server, further referred as C-ANDSF server, is configured to:
- delegate some level of control to a local ANDSF server, further referred as L-ANDSF server ;
- and/or delegate some level authority to a WISP (Wireless Internet Service Provider) partner.

When the C-ANDSF server provides a delegation to a L-ANDSF server, the C-ANDSF server provides to the UE means for accessing the L-ANDSF server. Accordingly, which information to be provided to the UE in order to reach the L-ANDSF server, and how to provide this information to the UE should be identified. Such appropriate information permits the UE to access the L-ANDSF server and to retrieve therefrom a predefined local policy.

With reference to Figure 1, a UE **1** is connected to a base station **2** of a mobile network. The base station **2** may be connected to a PGW **3** through appropriate means, for instance with using a router (not shown in Figure 1).

For instance, the mobile network can be LTE network, the base station **2** can be an eNodeB and the router can be a serving gateway (SGW).

In the present description, the considered mobile network is a LTE network. However, any other 3GPP mobile network, any equivalent mobile network, or any post-mobile network (such as LTE Advanced) could be also considered instead of a LTE network. For example, the mobile network could be also UMTS, the base station **2** a nodeB and the router a SGSN (Serving GPRS Support Node).

The UE **1** is also connected to a C-ANDSF **4** server, supposed to be reachable from the UE **1** via a configured IP address. The C-ANDSF **4** server, is located in the UE **1** home operator network, and is interfaced (possibly co-localized) with a PCRF **5** (Policy Charging Rule Function) module, that is interfaced with the PGW **3.**

Moreover, a L-ANDSF **6** server is interfaced with the eNodeB **2,** for instance co-localized with the eNodeB **2** as represented on Figure 1. Nevertheless, the L-ANDSF **6** server could be also interfaced with the eNodeB **2** without being inside eNodeB **2** equipment.

The UE **1** sends a policy request message **100** to the C-ANDSF **4** server, to retrieve or update inter-system mobility policy, or inter-system routing policies, or information about available access networks in its vicinity, or any other kind of information provided by an ANDSF server or any combination of such information types. For instance, the UE **1** may request to the C-ANDSF **4** server, operator policies such as Wi-Fi map, which Wi-Fi networks to be used or which application should be offloaded to Wi-Fi.

The fact that the UE **1** (source of the policy request message **100)** contacts the C-ANDSF **4** server to request policy information, is referred in the prior art as a "pull" model. However, a "push" model where the C-ANDSF **4** server pushes/sends directly policy information to the UE **1,** without any UE **1** request could be also considered.

Following the reception of the policy request **100,** the C-ANDSF **4** server sends, in response, a policy delegation message **101** to the UE **1.** This message aims to inform the UE **1,** that the C-ANDSF **4** server delegates some level of policy control, to the L-ANDSF **6** server interfaced with the eNodeB **2.** To do so, information such as (private) IP address of the L-ANDSF **6** server are communicated to the UE **1,** thanks to the policy delegation message **101.** Following the reception of the policy delegation message **101,** the UE **1** needs to access the L-ANDSF **6** server to request and retrieve a local policy.

At the same time (or before) of the sending of the policy delegation message **101,** the C-ANDSF **4** server sends a request message **102** to the PCRF **5** module, in order to trigger the establishment of a dedicated bearer from the PGW **3** to the UE **1.** The request message **102** may comprise information provided by the C-ANDSF **4** such as IP address of the L-ANDSF **6** server, in order to establish the dedicated bearer. This dedicated bearer will be further used only for accessing the L-ANDSF **6** server and routing L-ANDSF traffic.

By L-ANDSF traffic, is meant herein, packets referring (i.e. associated) to the L-ANDSF **6** server. For instance, uplink L-ANDSF traffic may refer to UE **1** query for local policies and downlink L-ANDSF traffic may refer to response of the L-ANDSF **6** server to UE **1** query.

Following the reception of the request message **102,** the PCRF **5** module sends a triggering message **103** to the PGW **3,** in order to establish the dedicated bearer. More particularly, the PCRF **5** module communicates to the PGW **3,** information to use for the dedicated bearer establishment. For instance the PCRF **5** module may communicate information such as Traffic Flow Template (TFT) function, IP address of the L-ANDSF **6** server (i.e. IP destination address for the TFT) and QCI (QoS class of identifier) to use.

Based on the communicated information, the PGW **3** establishes a dedicated bearer all along the LTE network, i.e. from a PGW **3** bearer context **7,** to a UE **1** dedicated RAB (Radio Access Bearer) **8.** The dedicated bearer is established according to a procedure known in the prior art. Particularly, information such as TFT and QCI are communicated between the different entities of the network (PGW, SGW, eNodeB), and to the UE **1,** which uses these information for the dedicated RAB **8** establishment with the eNodeB **2.**

Indeed, the dedicated RAB **8** allows the UE **1** to reach/access the L-ANDSF **6** server and send/receive data to/from it. In order to encapsulate the packets referring to the L-ANDSF **6** server in the dedicated RAB **8,** the UE **1** uses the TFT communicated by the eNodeB **2** during the establishment of the dedicated RAB **8,** this TFT comprising the (private) IP destination address of the L-ANDSF **6** server.

Other packets (i.e. not referring to the L-ANDSF **6** server) between the UE **1** and the PGW **3,** are encapsulated and routed through any other RAB **9** and any other PGW **3** bearer context **10,** as known in the prior art.

The uplink traffic towards the L-ANDSF **6** server (i.e. UE **1** requests for local policy) can be routed by the eNodeB **2** directly from the dedicated RAB **8,** or based on the analysis of information such as QCI or TEID (Tunnel Endpoint Identifier) of each bearer established with the eNodeB **2.** Indeed, the routing of the packets, more particularly the mapping between the dedicated RAB **8** and the L-ANDSF **6** server, is performed at eNodeB level.

For instance, any uplink traffic from the UE **1** arriving to the eNodeB **2** through an associated tunnel (i.e. bearer) is analyzed. More precisely the eNodeB **2** analyses information such as QCI or TEID of the tunnels, identifies if the traffic refers or not to the L-ANDSF **6** server and then routes respectively the traffic towards the L-ANDSF **6** server or towards the PGW **3.** The eNodeB **2** is also in charge to route any downlink traffic (referring or not to the L-ANDSF **6** server) towards the UE **1** as known in the prior art.

In one embodiment, a module may be in charge of realizing a part of the above described functions. For instance, the eNodeB **2** may comprise a module **11** configured for
- memorizing/storing information such as TEID or QCI, referring to the dedicated RAB **8 ;**
- verifying for each bearer associated to any incoming uplink traffic from the UE **1,** if bearer information match a stored information referring to the dedicated RAB **8 ;**
- in the affirmative, extracting the traffic from the bearer and routing it through the interface towards the L-ANDSF **6** server ;
- managing the reverse routing of the L-ANDSF traffic, i.e. re- encapsulating downlink packets coming from the L-ANDSF **6** server (i.e. L-ANDSF **6** server response to UE **1** requests for local policy) in the dedicated RAB **8** towards the UE **1.**

Moreover, it can be easily understood since more than one UE **1** may be connected to the eNodeB **2,** the module **11** may manage more than one dedicated RAB **8.** More particularly, the module **11** can store information referring to each dedicated bearer **8** established with each UE **1,** and is able to re-encapsulate downlink L-ANDSF packets in a corresponding dedicated RAB **8,** i.e. the dedicated RAB **8** wherein the uplink L-ANDSF traffic was extracted.

Advantageously, the proposed solution permits to filter L-ANDSF traffic at eNodeB **2** level, without needing to setup a public IP address for the L-ANDSF **6** server or to check each IP destination address of any packet. Indeed, it is easier to benefit from the mapping between bearers in the eNodeB **2** for filtering traffic, rather than inspect each IP destination address of all user-plane traffic.

Advantageously, each dedicated RAB **8** is only established for each UE **1** which has received from the C-ANDSF **4** server, a policy delegation message **101** referring to the L-ANDSF **6** server. Information for accessing the L-ANDSF **6** server and routing L-ANDSF traffic are just provided to each UE **1** the dedicated RAB **8** establishment.

According to the above-described embodiments, the L-ANDSF server is advantageously not publically reachable (for instance, via a public IP address provided to the UE) which may be of particular interest from a security and an architectural point of view.

Further, according to the above-described embodiments, an access to the L-ANDSF server is provided without any systematic verification of IP destination of all user-plane datagrams processed by the eNodeB in order to identify those associated with the L-ANDSF signaling, resulting in performance improvement.

## Claims

1. A central Access Network Discovery and Selection Function (4) server associated with a core network of a mobile network, configured to request the triggering of the establishment of a dedicated bearer in said mobile network for access by a user equipment (1) to a local Access Network Discovery and Selection Function (6) server associated with a radio access network of said mobile network, and to which the central Access Network Discovery and Selection Function server provides a delegation for at least a local policy.

2. The central Access Network Discovery and Selection Function server of the preceding claim, further configured to send, in response to a policy request message (100) received from the user equipment, a policy delegation message (101), said policy delegation message (101) including information relating to the local Access Network Discovery and Selection Function server.

3. The central Access Network Discovery and Selection Function (4) server of claim 1 or 2, further configured to request the triggering of the establishment of the dedicated bearer to a Policy Charging Rule Function (5) module.

4. A user equipment (1) configured to access a local Access Network Discovery and Selection Function (6) server associated with a radio access network of a mobile network and to which a central Access Network Discovery and Selection Function (4) server associated with a core network of said mobile network provides a delegation for at least a local policy, through a dedicated bearer established in said mobile network for said access.

5. The user equipment (1) of the preceding claim, further configured
- to send a policy request message (100) to the central Access Network Discovery and Selection Function (4) server to retrieve or update policy information;
- to receive a policy delegation message (101) from the central Access Network Discovery and Selection Function (4) server, said policy delegation message informing the user equipment (1) that the central Access Network Discovery and Selection Function (4) server delegates at least a local policy to a local Access Network Discovery and Selection Function (6) server, and including information relating to the local Access Network Discovery and Selection Function (6) server.

6. The user equipment (1) of the preceding claim, further configured to associate the information relating to the local Access Network Discovery and Selection Function (6) server with information referring to the dedicated bearer.

7. A base station (2) of a mobile network, configured to establish a dedicated radio access bearer (8) with a user equipment (1), the dedicated radio access bearer (8) being used for access by the user equipment (1) to a local Access Network Discovery and Selection Function (6) server associated with a radio access network of said mobile network and to which a central Access Network Discovery and Selection Function (4) server provides a delegation for at least a local policy.

8. The base station (2) of the preceding claim, comprising a module (11) configured
- to extract user equipment (1) incoming data from the dedicated radio access bearer (8) ;
- to route the extracted data towards the local Access Network Discovery and Selection Function (6) server.

9. The base station (2) of the preceding claim, wherein the module (11) is further configured
- to store information referring to the dedicated radio access bearer (8) ;
- to verify for each bearer associated to any incoming uplink data from the user equipment (1) a bearer information ;
- to extract and route the data towards the local Access Network Discovery and Selection Function (6) server when the bearer information match a stored information referring to the dedicated radio access bearer (8).

10. The base station of the preceding claim, wherein the bearer information includes Tunnel Endpoint Identifier or Quality of Service class of identifier.

11. The base station (2) of any of the claims 5 to 7, wherein the module (11) is further configured for routing data from the local Access Network Discovery and Selection Function (6) server to the user equipment (1) with using the dedicated radio access bearer (8).

12. A method for allowing a user equipment (1) to access a local Access Network Discovery and Selection Function (6) server associated with a radio access network of a mobile network and to which a central Access Network Discovery and Selection Function (4) server associated with a core network of said mobile network provides a delegation for at least a local policy, the method comprising allowing said access using a dedicated bearer established for said access in said mobile network.

13. The method of the preceding claim, further comprising informing the user equipment (1) by the central Access Network Discovery and Selection Function (4) server of a delegation of a level of policy control to the local Access Network Discovery and Selection Function (6) server.

14. The method of claim 9 or 10, further comprising requesting a Policy Charging Rule Function (5) module by the central Access Network Discovery and Selection Function (4) server to trigger the establishment of the dedicated bearer.

15. The method of the preceding claim, wherein following the triggering of a dedicated bearer establishment, the base station (2) establishes a dedicated radio access bearer (8) with the user equipment (1), the dedicated radio access bearer (8) being used for said access to the local Access Network Discovery and Selection Function (6) server.
